# EUROPÄISCHE PATENTANMELDUNG

(11) **EP 0 861 874 A1**
(43) Veröffentlichungstag der Anmeldung: **02.09.1998**
(21) Anmeldenummer: 97103219.8
(22) Anmeldetag: 27.02.1997
(51) Int. Cl.: C08L 71/00, C08F 283/06, C08F 283/10

(54) **Verwendung einer Mischung enthaltende Phenoxyharz als Additiv für einen thermoplastischen Kunststoff zur Reduzierung des Diffusionskoeffizienten des thermoplastischen Kunststoffes**

(71) Anmelder: Roth Werke GmbH, 35232 Dautphetal (DE)
(72) Erfinder:
(74) Vertreter: Albrecht, Rainer Harald, Dr.-Ing.

(57) **Zusammenfassung**

Verwendung einer Mischung aus zumindest einem Phenoxyharz und zumindest einem Radikalbildner sowie aus zumindest einem Pfropfcopolymerisationskatalysator als Additiv für einen thermoplastischen Kunststoff zur Reduzierung des Diffusionskoeffizienten des thermoplastischen Kunststoffes. Die Mischung wird dem thermoplastischen Kunststoff in einer Menge von 2 bis 8 Gew.-%, bezogen auf den thermoplastischen Kunststoff, beigemischt.

## Beschreibung

Die Erfindung betrifft die Verwendung einer Mischung als Additiv für einen thermoplastischen Kunststoff zur Reduzierung des Diffusionskoeffizienten des thermoplastischen Kunststoffes. - Thermoplastische Kunststoffe zeichnen sich in der Regel durch die Eigenschaft aus, daß mit ihnen in Kontakt stehende Gase oder Flüssigkeiten, insbesondere aliphatische oder aromatische Kohlenwasserstoffe, allmählich durch den Kunststoff hindurchdiffundieren. Man spricht in diesem Zusammenhang auch von Permeation oder Durchdringung des thermoplastischen Kunststoffs durch das fluide Medium. Werden fluide Medien in Behältern aus thermoplastischem Kunststoff aufbewahrt oder beispielsweise durch Rohrleitungen aus thermoplastischem Kunststoff geleitet, so ist eine allmähliche Diffusion der Gase oder Flüssigkeiten durch die Behälterwandungen oder Rohrleitungswandungen in der Regel sehr unerwünscht. Dies gilt insbesondere dann, wenn es sich bei den fluiden Medien um giftige oder schadstoffhaltige Substanzen handelt. Um die durch Diffusion entstehenden Leckmengen möglichst gering zu halten, ist es üblich, die Wandungen aus dem thermoplastischen Kunststoff möglichst dick auszuführen. Dies ist jedoch aufwendig und teuer. - Der Diffusionskoeffizient gibt üblicherweise an, wie schnell Moleküle, in diesem Fall die Moleküle des fluiden Mediums, in der Richtung eines Konzentrationsgradienten wandern. Der Diffusionskoeffizient wird in der Regel in m²/s angegeben.

Bei den bekannten Maßnahmen der eingangs genannten Art, von denen die Erfindung ausgeht (DE-PS 41 02 181), wird ein thermoplastisches Additiv zur Verminderung der Diffusion von Kohlenwasserstoffen durch thermoplastische Materialien eingesetzt, das aus einem thermoplastischen Trägermaterial, Polyvinylidenfluorid und Aluminiumstearat besteht. Das Aluminiumstearat dient als Verbindungsmittel zur Verbindung des Polyvinylidenfluorids mit dem thermoplastischen Trägermaterial. Wenn Kohlenwasserstoffe in den mit dem Additiv versetzten thermoplastischen Kunststoff eindringen, soll die Anwesenheit des Aluminiumstearats eine lokale Eindickung oder Gelatinierung der Kohlenwasserstoffe bewirken, wodurch die Diffusion der Kohlenwasserstoffe reduziert werden soll. Der nach diesen bekannten Maßnahmen mit dem Additiv versetzte thermoplastische Kunststoff weist nichtsdestoweniger noch einen relativ hohen Diffusionskoeffizienten auf und nach längeren Lagerungszeiten zeigen beispielsweise aus diesem thermoplastischen Kunststoff hergestellte Behälter relativ hohe Verlustraten an im Behälter befindlichen fluiden Medien. Dies ist insbesondere bei giftigen und schadstoffhaltigen fluiden Medien sehr problematisch. Der nach den bekannten Maßnahmen mit dem Additiv versetzte Kunststoff ist im übrigen nur wenig resistent gegenüber UV-Licht, so daß der Kunststoff nach längerer Sonnenlichteinwirkung Zersetzungserscheinungen aufweist. Weiterhin lassen die antistatischen Eigenschaften des mit dem bekannten Additiv versetzten thermoplastischen Kunststoffs zu wünschen übrig.

Demgegenüber liegt der Erfindung das technische Problem zugrunde, die Verwendung einer Mischung als Additiv für einen thermoplastischen Kunststoff anzugeben, wobei der Diffusionskoeffizient des thermoplastischen Kunststoffs im Vergleich zu den bekannten Maßnahmen reduziert wird. Im übrigen soll der mit dem Additiv versetzte thermoplastische Kunststoff ausreichend beständig gegen UV-Lichteinwirkung sein und zudem antistatische Eigenschaften aufweisen.

Zur Lösung dieses technischen Problems lehrt die Erfindung die Verwendung einer Mischung aus zumindest einem Phenoxyharz und zumindest einem Radikalbildner und/oder zumindest einem Pfropfcopolymerisationskatalysator als Additiv für einen thermoplastischen Kunststoff zur Reduzierung des Diffusionskoeffizienten des thermoplastischen Kunststoffes mit der Maßgabe, daß die Mischung dem thermoplastischen Kunststoff in einer Menge von 2 bis 8 Gew.-%, bezogen auf den thermoplastischen Kunststoff, beigemischt wird. - Phenoxyharz meint im Rahmen der Erfindung ein thermoplastisches Polymer, das durch Reaktion eines Diphenols mit Chloromethyl-oxiran entsteht. Phenoxyharze sind hochmolekulare Polyhydroxyether.

Vorzugsweise ist das Phenoxyharz eine Mischung aus Phenol, 4,4'-(1-methylethyliden)bispolymer und Chloromethyl-oxiran. (Nachfolgend wird dieses bevorzugte Phenoxyharz mit der Abkürzung PKFE bezeichnet). Dieses bevorzugte Phenoxyharz hat die Summenformel (C₁₈O₃H₂₀)ₓ und vorzugsweise ein Molekulargewicht von 40.000 bis 100.000.

Nach bevorzugter Ausführungsform der Erfindung wird als Radikalbildner ein Peroxid eingesetzt. Vorzugsweise wird Benzoylperoxid und/oder 1,3-Butylenglykoldimethacrylat als Radikalbildner eingesetzt. Als Pfropfcopolymerisationskatalysator wird vorzugsweise Silbernitrat eingesetzt. Es liegt auch im Rahmen der Erfindung, daß ein geeigneter Pfropfcopolymerisationskatalysator verwendet wird, der die weiter unten erläuterte Pfropfcopolymerisation zwischen dem thermoplastischen Kunststoff und dem Phenoxyharz katalysiert. Zweckmäßigerweise wird im Rahmen des Patentanspruches 1 als Radikalbildner und Katalysator ein Gemisch aus einem Peroxid, bevorzugt Benzoylperoxid, und Silbernitrat eingesetzt. Es versteht sich, daß der Radikalbildner und/oder der Pfropfcopolymerisationskatalysator nur in relativ geringen Mengen in der Mischung enthalten sind. Vorzugsweise liegt das Peroxid und/oder das Silbernitrat in alkoholischer Lösung, bevorzugt in Isopropylalkohol, vor.

Nach bevorzugter Ausführungsform der Erfindung weist die Mischung zusätzlich zumindest eine phenolisches Antioxidans und/oder zumindest ein phosphitisches Antioxidans auf. Phenolisches Antioxidans meint Antioxidantien mit Phenolgruppen und/oder substituierten Phenolgruppen. Phosphitisches Antioxidans meint vorzugsweise ein Antioxidans in Form eines organischen Phosphits. Nach bevorzugter Ausführungsform der Erfindung weist die Mischung zumindest ein Antioxidans der Formel A1 und/oder der Formel A2 auf. Antioxidans der Formel A1 meint im Rahmen der Erfindung die Verbindung Pentaerythrityl-tetrakis [3-(3,5-di-tert.butyl-4-hydroxyphenyl)propionat]. Antioxidans der Formel A2 meint im Rahmen der Erfindung die Verbindung Tris-(2,4-di-tert.butylphenyl)-phosphit. Nachfolgend werden die Strukturformeln A1 und A2 angegeben:

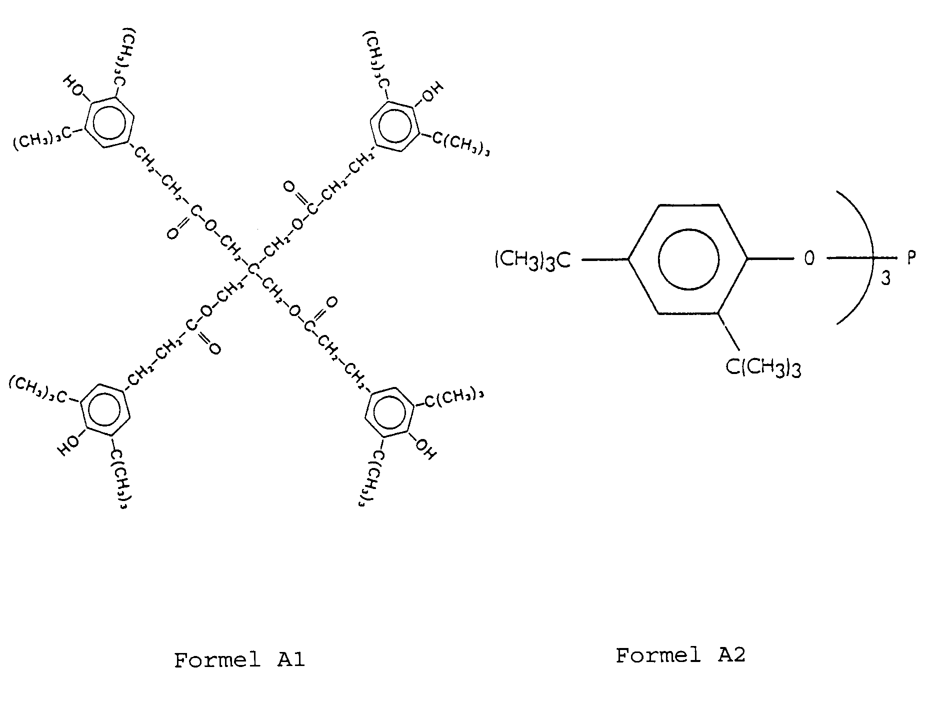

Es liegt auch im Rahmen der Erfindung, daß die Mischung nach Patentanspruch 1 ein Antioxidans mit einer von der Formel A1 abgewandelten Strukturformel, insbesondere mit anderen Substituenten, beispielsweise Alkylsubstituenten, an den Phenolringen, aufweist. Weiterhin liegt es auch im Rahmen der Erfindung, daß die Mischung nach Patentanspruch 1 ein Antioxidans mit einer von der Formel A2 abgewandelten Strukturformel, insbesondere mit anderen Substituenten, beispielsweise Alkylsubstituenten, an dem Benzolring, aufweist. Nach bevorzugter Ausführungsform der Erfindung wird ein Gemisch aus einem Antioxidans der Formel A1 und einem Antioxidans der Formel A2 eingesetzt. Vorzugsweise werden im Rahmen der Erfindung die Antioxidantien mit den Formeln A1 und A2 in einem Gewichtsverhältnis von 1:1 in der Mischung verwendet. Nach einer weiteren Ausführungsform der Erfindung werden die Antioxidantien mit den Formeln A1 und A2 in einem Gewichtsverhältnis von A1:A2 = 1:2 in der Mischung eingesetzt.- Das eingesetzte Antioxidans bzw. die eingesetzten Antioxidantien und ihre mengenmäßige Bemessung wird im Rahmen der Erfindung jeweils auf den thermoplastischen Kunststoff abgestimmt, dessen Diffusionskoeffizient reduziert werden soll.

Vorzugsweise wird das erfindungsgemäße Additiv einem thermoplastischen Kunststoff aus der Gruppe Polyalkene beigemischt. Nach einer bevorzugten Ausführungsform der Erfindung, der im Rahmen der Erfindung besondere Bedeutung zukommt, wird das erfindungsgemäße Additiv dem thermoplastischen Kunststoff Polyethylen beigemischt. Durch die erfindungsgemäße Beimischung des Additivs wird der Diffusionskoeffizient des Polyethylens beachtlich reduziert und aus mit dem Additiv versetztem Polyethylen hergestellte Gegenstände sind gegenüber einer Diffusion von fluiden Medien überraschend dicht. Vorzugsweise wird das Additiv einem Polyethylen hoher Dichte (HDPE) beigemischt. Es versteht sich daß im Rahmen der Erfindung auch andere thermoplastische Kunststoffe, beispielsweise Polyethylen niedriger Dichte (LDPE) oder Polypropylen eingesetzt werden können. Nach bevorzugter Ausführungsform der Erfindung wird die als Additiv eingesetzte Mischung dem thermoplastischen Kunststoff in einer Menge von 5 Gew.-%, vorzugsweise 2 bis 5 Gew.-%, bezogen auf den thermoplastischen Kunststoff, beigemischt.

Nach bevorzugter Ausführungsform, der im Rahmen der Erfindung besondere Bedeutung zukommt, weist die Mischung aus dem Phenoxyharz und dem Antioxidans einen Organosilanester auf. Der Organosilanester fungiert im Rahmen der Erfindung gleichsam als Monomer, welches Monomer im Rahmen der weiter unten erläuterten Pfropfcopolymerisationsreaktion an die Polymerkette des thermoplastischen Kunststoffes gebunden wird. Dieses gebundene Monomer bildet gleichsam das Bindeglied zwischen der Polymerkette des thermoplastischen Kunststoffes und dem Phenoxyharz, welches Phenoxyharz an eine Polymerseitenkette der Polymerkette gebunden wird. Vorzugsweise wird als Organosilanester 1-Propanamin, 3-triethoxysilan mit der Summenformel NH₂(CH₂)₃Si(OC₂H₅)₃, eingesetzt. - Es liegt im Rahmen der Erfindung, daß als Momomer eine organische Verbindung mit zumindest einer Vinylgruppe eingesetzt wird. Es liegt weiterhin im Rahmen der Erfindung, daß als Monomer eine organische Verbindung eingesetzt wird, die im Rahmen der Pfropfcopolymerisation als Bindeglied zwischen der Polymerkette des thermoplastischen Kunststoffes und dem Phenoxyharz, das an eine Polymerseitenkette gebunden wird, geeignet ist.

Nach bevorzugter Ausführungsform der Erfindung enthält die Mischung aus dem Phenoxyharz und dem Antioxidans zusätzlich einen UV-Stabilisator. Vorzugsweise wird ein sterisch gehindertes Amin (HALS) als UV-Stabilisator eingesetzt. Im Rahmen der Erfindung wird zweckmäßigerweise Poly[[6-[(1,1,3,3-tetramethylbutyl)amino]-s-triazin-2,4-diyl] [(2,2,6,6-tetramethyl-4-piperidyl)imino]hexamethylen [(2,2,6,6-tetramethyl-4-piperidyl)imino]] als UV-Stabilisator eingesetzt (nachfolgend mit der Bezeichnung U1 abgekürzt).

Nach bevorzugter Ausführungsform der Erfindung enthält die Mischung aus dem Phenoxyharz und dem Antioxidans zusätzlich zumindest ein Antistatikum. Zweckmäßigerweise besteht das Antistatikum im wesentlichen aus einem ethoxylierten Amin. Vorzugsweise enthält die Mischung ein Gemisch aus einem Kurzzeit- und Langzeit-Antistatikum, zweckmäßigerweise ein Gemisch aus Glycerinmonostearat und einem Alkylaminethoxylat. Vorzugsweise wird der Mischung ein Gemisch aus Polypropylen, Glycerinmonostearat und einem Alkylaminethoxylat zugesetzt. Aufgrund dieser, zumindest ein Antistatikum enthaltenden Zusätze, wird die Verarbeitbarkeit des thermoplastischen Kunststoffes verbessert.

Nach bevorzugter Ausführungsform der erfindungsgemäßen Verwendung weist die Mischung zusätzlich einen Anteil an Polypropylen auf. Überraschenderweise trägt dieser Anteil an Polypropylen in dem Additiv zu einer sehr effektiven Reduzierung des Diffusionskoeffizienten des thermoplastischen Kunststoffes, insbesondere des Polyethylens, bei.

Nachfolgend werden bevorzugte Gew.-%-Anteile der einzelnen Komponenten in der Mischung angegeben. Die Gew.-%-Angaben sind dabei auf die als Additiv eingesetzte Mischung bezogen. Nach bevorzugter Ausführungsform der Erfindung weist die Mischung einen Anteil von 60 bis 75 Gew.-%, vorzugsweise 65 bis 71 Gew.-%, an dem Phenoxyharz auf. Eine 1 %ige alkoholische Lösung eines Peroxids ist vorzugsweise zu einem Anteil von 0,15 bis 0,25 Gew.-%, bevorzugt 0,19 bis 0,23 Gew.-%, in der Mischung enthalten. Vorzugsweise enthält die Mischung einen Anteil von 0,15 bis 0,25 Gew.-%, bevorzugt 0,19 bis 0,23 Gew.-%, einer 0,1 %igen alkoholischen Lösung an Silbernitrat. Der Anteil des Antioxidans in der Mischung beträgt vorteilhafterweise 1,5 bis 2,5 Gew.-%, bevorzugt 2,0 bis 2,3 Gew.-%. Ein Organosilanester ist zweckmäßigerweise in einem Anteil von 0,15 bis 0,25 Gew.-%, vorzugsweise 0,19 bis 0,23 Gew.-%, in der Mischung enthalten. Der Anteil des UV-Stabilisators in der Mischung beträgt vorzugsweise 2 bis 10 Gew.-%, bevorzugt 3 bis 9 Gew.-%. Die Mischung enthält zumindest ein Antistatikum vorzugsweise in einem Anteil von 3 bis 10 Gew.-%, bevorzugt 4 bis 8 Gew.-%. Ein Zusatz von Polypropylen ist in der Mischung vorzugsweise in einem Anteil von 10 bis 20 Gew.-% bevorzugt 12 bis 18 Gew.-% enthalten.

Der Erfindung liegt die Erkenntnis zugrunde, daß der thermoplastische Kunststoff, vorzugsweise Polyethylen und bevorzugt Polyethylen hoher Dichte (HDPE), der mit dem erfindungsgemäßen Additiv versetzt wird, mit Komponenten dieses Additivs eine feste molekulare Bindung eingeht. Diese chemische Bindung kommt erfindungsgemäß durch die sog. Pfropfcopolymerisation zustande. Als Pfropfcopolymere werden Makropolymere bezeichnet, deren Seitenketten aus anderen Struktureinheiten bestehen als die Hauptketten. Im Rahmen der Erfindung wird ein Phenoxyharz als sogenanntes Vorpolymer an die Hauptkette des thermoplastischen Kunststoffs, vorzugsweise Polyethylen, gebunden. Dabei fungiert ein Monomer, vorzugsweise ein Organosilanester, gleichsam als Bindeglied zwischen der Hauptkette und dem Phenoxyharz. Das Additiv wird dem thermoplastischen Kunststoff zugegeben und die Komponenten des Additivs gehen mit dem thermoplastischen Kunststoff eine chemische Verbindung im Sinne der Pfropfcopolymerisation ein. Diese chemische Verbindung hat den beachtlichen Vorteil, daß das Additiv fest in den thermoplastischen Kunststoff eingebunden ist und in dem thermoplastischen Kunststoff nicht gleichsam vagabundieren kann.

Der resultierende, mit dem erfindungsgemäßen Additiv versetzte thermoplastische Kunststoff ist überraschend resistent gegen die Diffusion von fluiden Medien, insbesondere Kohlenwasserstoffen, sowohl als Dampf als auch in flüssiger Form. Der Diffusionskoeffizient der erfindungsgemäß modifizierten thermoplastischen Kunststoffe ist beachtlich geringer als der Diffusionskoeffizient von thermoplastischen Kunststoffen, die nach den eingangs beschriebenen bekannten Maßnahmen hergestellt sind. Dies ist insbesondere dann von Vorteil, wenn beispielsweise aus dem erfindungsgemäß modifizierten Kunststoff Behälter oder Rohrleitungen hergestellt werden, die für giftige und schadstoffhaltige fluide Medien vorgesehen sind. Im übrigen ist der erfindungsgemäß mit dem Additiv modifizierte Kunststoff überraschend beständig gegenüber UV-Lichteinwirkung. Außerdem weist der modifizierte thermoplastische Kunststoff vorteilhafte antistatische Eigenschaften auf. Besonders voteilhaft ist, daß durch die feste Einbindung des Additivs in den thermoplastischen Kunststoff die genannten erfindungsgemäßen Eigenschaften nicht durch Verlust oder Verbrauch, beispielsweise durch Auswaschen des Additivs, verlorengehen können.

Vorzugsweise wird die Mischung des Additivs bei Raumtemperatur dem thermoplastischen Kunststoff, bevorzugt Polyethylen, zu einem Anteil von 5 Gew.-%, bezogen auf den thermoplastischen Kunststoff, beigegeben. Von besonderem Vorteil ist, daß der mit dem Additiv versetzte thermoplastische Kunststoff unter den üblichen Verarbeitungsbedingungen für den thermoplastischen Kunststoff verarbeitet, insbesondere beispielsweise extrudiert werden kann. Besonders überraschend ist dabei, daß der Kunststoff mit dem eingebundenen Additiv noch einfacher, beispielsweise durch Extrusion oder Spritzgießen, verarbeitet werden kann als der ursprüngliche unmodifizierte Kunststoff. Der modifizierte Kunststoff läßt sich hierbei ohne Schwierigkeiten plastifizieren und dabei wird eine sehr vollständige Homogenisierung und insbesondere sehr homogene Temperaturverteilung erzielt.

Nach bevorzugter Ausführungsform, der im Rahmen der Erfindung besondere Bedeutung zukommt, wird das Additiv zunächst einer Ausgangsgrundmenge an thermoplastischem Kunststoff zugefügt und das Additiv somit mit dieser Menge an thermoplastischem Kunststoff gleichsam verdünnt. Anschließend wird das auf diese Weise verdünnte Additiv der Restmenge des thermoplastischen Kunststoffes zugesetzt und durch Extrusion oder Spritzgießen weiterverarbeitet. Im Zuge dieser Verarbeitung und bei den entsprechenden Verarbeitungstemperaturen geht das Additiv die beschriebene chemische Verbindung mit den Polymerketten des thermoplastichen Kunststoffes ein. Die Verdünnung des Additivs mit dem thermoplastischem Kunststoff stellt eine gleichmäßige Verteilung des Additivs in dem thermoplastischen Kunststoff sicher, so daß der mit dem Additiv versehene thermoplastische Kunststoff überall die o. g. vorteilhaften Eigenschaften und insbesondere den geringen Diffusionskoeffizienten aufweist.

Die oben bereits erwähnte Pfropfcopolymerisation gehört für verschiedene Anwendungsbereiche grundsätzlich zum Stand der Technik. Die Pfropfcopolymerisation mit Phenoxyharzen zur Reduzierung des Diffusionskoeffizienten von thermoplastischen Kunststoffen ist jedoch bislang nicht bekannt. Diese Pfropfcopolymerisation wird nachfolgend erläutert:

Bei der Pfropfcopolymerisation wird zunächst die Polymerkette des Substrates, im vorliegenden Fall des thermoplastischen Kunststoffes, aktiviert, indem mittels eines Pfropfcopolymerisations-Initiators Wasserstoffatome aus der Polymerkette entfernt werden. An diesen Stellen können die Monomer-/Vorpolymer-Ketten durch Kohlenstoff-Bindungen gebunden werden und als Polymerseitenketten gleichsam anwachsen. Im Rahmen der Erfindung werden durch diese Pfropfcopolymerisationen neue vorteilhafte Eigenschaften des Substrates erzeugt, ohne die ursprünglichen positiven Eigenschaften des unmodifizierten Substrates zu beeinträchtigen. Nachfolgend wird die Pfropfcopolymerisation ganz allgemein und für die Erfindung nicht beschränkend, anhand eines Reaktionsschemas für Polyethylen hoher Dichte (HDPE) erläutert. Hierbei wird ein Wasserstoffatom vom Substrat, d. h. von der Polyethylenkette, mit Hilfe des Pfropfcopolymerisations-Initiators, entfernt, so daß ein freies Radikal entsteht.
1. Bildung des freien Radikals mit Hilfe des Pfropfcopolymerisations-Initiators: 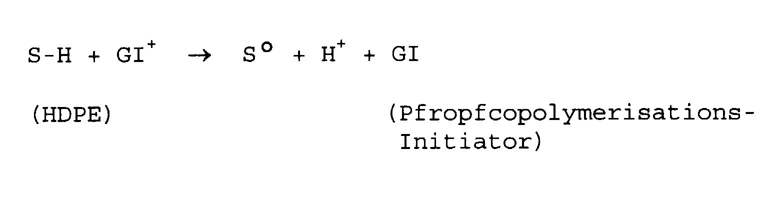
2. Das freie Radikal reagiert dann mit dem Monomer. Damit beginnt die Pfropfcopolymerisation und das Anwachsen der Seitenkette an das Substrat S, d. h. an die Polyethylenkette: 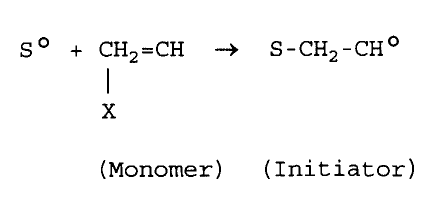
3. Kettenfortpflanzung: 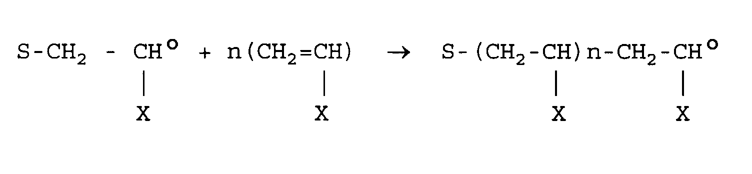
   Im Rahmen der Erfindung wird über die an die Polyethylenkette gebundenen Monomerbausteine das Phenoxyharz in die Seitenkette eingebunden.
4. Zurückbildung des Propfcopolymerisations-Initiators mit Hilfe eines Peroxids: 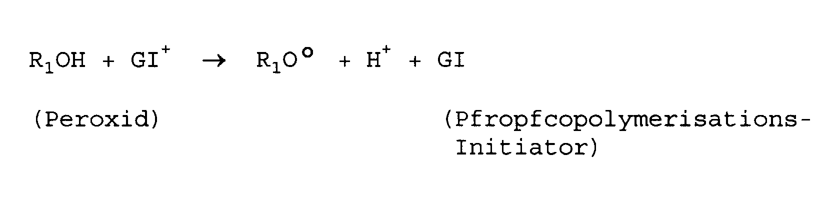
5. Die Kettenabbruchreaktion kann durch Radikalkombination beispielsweise nach der folgenden Reaktion stattfinden: 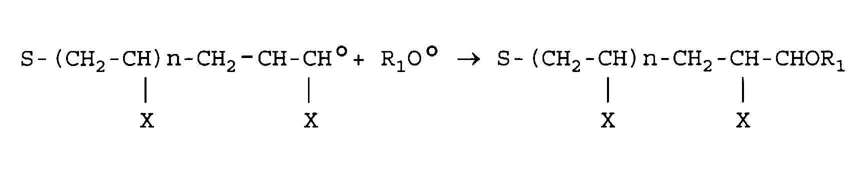
6. In Anwesenheit des Peroxids kann auch die folgende Kettenabbruchreaktion stattfinden: 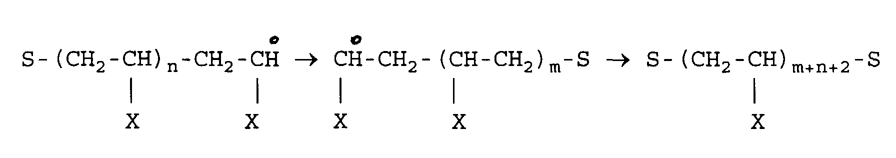
   Die im Rahmen der Erfindung eingesetzten Antioxidantien dienen als Verarbeitungsstabilisatoren für den thermoplastischen Kunststoff und haben die Funktion, überschüssige Radikale abzufangen, die im Verlauf der Pfropfcopolymerisationsreaktion unkontrolliert im Überschuß entstehen, so daß eine unerwünschte Kettenabbruchreaktion bezüglich der Polyethylen-Hauptkette als Nebenreaktion vermieden wird.

Die Erfindung wird nachfolgend anhand von Ausführungsbeispielen näher erläutert: Das Phenoxyharz wurde in einen Behälter gegeben und der Organosilanester (als Monomer) und Benzoylperoxid/Silbernitrat (als Radikalbildner bzw. Katalysator) sowie die übrigen in den folgenden Ausführungsbeispielen 1 bis 3 jeweils angegebenen Komponenten wurden hinzugefügt und zu einer gleichmäßigen Mischung verrührt. Das so hergestellte Additiv wurde dann mit Polyethylen hoher Dichte (HDPE) bei Raumtemperatur gemischt, wobei der Anteil des Additivs 2 bis 5 Gew.-% in bezug auf das Polyethylen betrug. Das mit dem Additiv versetzte Polyethylen kann dann wie üblich, entweder durch Extrusion, Spritzgießen oder Formen unter den üblichen Verarbeitungsbedingungen weiterverarbeitet werden. Das auf diese Weise verarbeitete Polyethylen zeichnet sich durch einen sehr geringen Diffusionskoeffizienten sowie durch hervorragende antistatische Eigenschaften aus. Im folgenden werden in den Ausführungsbeispielen 1 bis 3 bevorzugte Mischungen für das Additiv angegeben:

| Ausführungsbeispiel 1: | |
|---|---|
| Phenoxyharz (PKFE) | 66,2 Gew.-% |
| Antioxidans (A1 und A2 im Gewichtsverhältnis 1:1) | 2,21 Gew.-% |
| UV-Stabilisator (U1) | 8,83 Gew.-% |
| Antistatikum (Glycerinmonostearat, Alkylaminethoxylat) | 6,6 Gew.-% |
| Polypropylen | 15,5 Gew.-% |
| 1-Propanamin, 3-triethoxysilan | 0,22 Gew.-% |
| Benzoylperoxid (1 %ig in Isopropylalkohol) | 0,22 Gew.-% |
| Silbernitrat (0,1 %ig in Isopropylalkohol) | 0,22 Gew.-% |

| Ausführungsbeispiel 2: | |
|---|---|
| Phenoxyharz (PKFE) | 70,3 Gew.-% |
| Antioxidans (A1 und A2 im Gewichtsverhältnis 1:1) | 2,0 Gew.-% |
| UV-Stabilisator (U1) | 3,0 Gew.-% |
| Antistatikum (Glycerinmonostearat, Alkylaminethoxylat) | 6,0 Gew.-% |
| Polypropylen | 14,1 Gew.-% |
| 1,3-Butylenglycoldimethacrylat | 4,0 Gew.-% |
| 1-Propanamin, 3-triethoxysilan | 0,2 Gew.-% |
| Benzoylperoxid (1 %ig in Isopropylalkohol) | 0,2 Gew.-% |
| Silbernitrat (0,1 %ig in Isopropylalkohol) | 0,2 Gew.-% |

| Ausführungsbeispiel 3: | |
|---|---|
| Phenoxyharz (PKFE) | 67,6 Gew.-% |
| Antioxidans (A1 und A1 im Gewichtsverhältnis 1:1) | 0,22 Gew.-% |
| UV-Stabilisator (U1) | 9,0 Gew.-% |
| Antistatikum (Glycerinmonostearat, Alkylaminethoxylat) | 6,76 Gew.-% |
| Polypropylen | 15,76 Gew.-% |
| 1-Propanamin, 3-triethoxysilan | 0,22 Gew.-% |
| Benzoylperoxid (1 %ig in Isopropylalkohol) | 0,22 Gew.-% |
| Silbernitrat (0,1 %ig in Isopropylalkohol) | 0,22 Gew.-% |

Die Patentansprüche 1 bis 8 betreffen eine Verwendung zur Reduzierung des Diffusionskoeffizienten eines thermoplastischen Kunststoffes. Gegenstand der Erfindung ist auch ein Verfahren zur Reduzierung des Diffusionskoeffizienten eines thermoplastischen Kunststoffes mit den Merkmalen des Patentanspruches 1 bzw. jeweils mit den Merkmalen der nachgeordneten Patentansprüche 2 bis 8.

## Patentansprüche

1. Verwendung einer Mischung aus zumindest einem Phenoxyharz und zumindest einem Radikalbildner sowie aus zumindest einem Pfropfcopolymerisationskatalysator als Additiv für einen thermoplastischen Kunststoff zur Reduzierung des Diffusionskoeffizienten des thermoplastischen Kunststoffes, mit der Maßgabe, daß die Mischung dem thermoplastischen Kunststoff in einer Menge von 2 bis 8 Gew.-%, bezogen auf den thermoplastischen Kunststoff, beigemischt wird.

2. Verwendung nach Anspruch 1, wobei das Phenoxyharz eine Mischung aus Phenol,4,4'-(1-methylethyliden)bispolymer und Chloromethyl-oxiran ist.

3. Verwendung nach einem der Ansprüche 1 oder 2, wobei Benzoylperoxid und/oder 1,3- Butylenglykoldimethacrylat als Radikalbildner eingesetzt wird.

4. Verwendung nach einem der Ansprüche 1 bis 3, wobei Silbernitrat als Pfropfcopolymerisationskatalysator eingesetzt wird.

5. Verwendung nach einem der Ansprüche 1 bis 4, wobei die Mischung zusätzlich zumindest ein phenolisches Antioxidans und/oder zumindest ein phosphitisches Antioxidans aufweist.

6. Verwendung nach Anspruch 5, wobei ein Gemisch aus einem Antioxidans der Formel A1 und einem Antioxidans der Formel A2 eingesetzt wird.

7. Verwendung nach einem der Ansprüche 1 bis 6, wobei die Mischung zusätzlich einen Organosilanester aufweist.

8. Verwendung nach einem der Ansprüche 1 bis 7, wobei die Mischung zusätzlich einen UV-Stabilisator aufweist.

9. Verwendung nach Anspruch 8, wobei Poly[[6-[(1,1,3,3,-tetramethylbutyl)amino]-s-triazin-2,4-diyl][(2,2,6,6-tetramethyl-4-piperidyl)imino]hexamethylen[(2,2,6,6-tetramethyl-4-piperidyl)imin]] als UV-Stabilisator eingesetzt wird.

10. Verwendung nach einem der Ansprüche 1 bis 9, wobei die Mischung zusätzlich zumindest ein Antistatikum enthält, vorzugsweise ein Gemisch aus Glycerinmonostearat und Alkylaminethoxylat.

11. Verwendung nach einem der Ansprüche 1 bis 10, wobei die Mischung zusätzlich einen Anteil an Polypropylen aufweist.

12. Verwendung nach einem der Ansprüche 1 bis 11, wobei der thermoplastische Kunststoff Polyethylen hoher Dichte (HDPE) ist.
